# FASCICULE DE BREVET EUROPEEN

(11) **EP 1 776 261 B1**
(45) Date de publication et mention de la délivrance du brevet: **10.10.2012**
(21) Numéro de dépôt: 05797544.3
(22) Date de dépôt: 05.08.2005
(51) Int. Cl.: B60R 25/02, B62H 5/02

(54) **DISPOSITIF ANTIVOL POUR CYCLE OU ANALOGUE**
DIEBSTAHLSICHERUNGSVORRICHTUNG FÜR EIN ZWEIRAD ODER ÄHNLICHES
ANTITHEFT DEVICE FOR CYCLE OR THE LIKE

(30) Priorité: 05.08.2004 FR 0451788
(43) Date de publication de la demande: 25.04.2007
(73) Titulaire: Gauthier, Christian, 75014 Paris (FR)
(72) Inventeur: Gauthier, Christian, 75014 Paris (FR)
(74) Mandataire: Fantin, Laurent
(86) Numéro de dépôt international: PCT/FR2005/050654
(87) Numéro de publication internationale: WO 2006/021730

(56) Documents cités:
- FR-A1- 2 695 604
- GB-A- 2 298 676
- US-A- 1 881 346
- US-A- 2 139 984
- US-A- 5 279 137

## Description

La présente invention se rapporte à un dispositif antivol pour cycle ou analogue, susceptible de s'adapter à tous les véhicules dirigés par un guidon.

Une solution pour éviter le vol des bicyclettes consiste à bloquer soit une roue, soit les moyens d'entraînement, plus particulièrement la chaîne, ou soit la direction.

Pour bloquer la direction, on immobilise généralement la colonne de direction solidaire du guidon par rapport à la douille de direction solidaire du cadre, à l'aide d'une tige ou d'une goupille qui traverse ladite douille et ladite colonne. Ainsi, lorsque le dispositif antivol est activé, la colonne de direction ne peut pas pivoter par rapport à la douille de direction si bien qu'il est impossible d'agir sur le guidon pour se diriger convenablement.

Même si le blocage est relativement efficace, ce type de dispositif antivol n'est pas pleinement satisfaisant car le voleur en tentant de s'emparer de la bicyclette a tendance à essayer de braquer le guidon ce qui peut endommager la colonne de direction et/ou le dispositif de blocage. Ce risque d'endommagement est d'autant plus élevé que l'effort du voleur est démultiplié en raison du bras de levier formé par le guidon. Ainsi, l'effort induit par le voleur au niveau des extrémités du guidon provoque des contraintes mécaniques au niveau de la zone de blocage relativement élevées susceptibles d'engendrer des déformations au niveau du tube formant la colonne de direction.

Ce risque d'endommagement de la bicyclette est inhérent à tous les dispositifs antivols bloquant un organe à l'état activé.

Pour pallier cet inconvénient, les documents JP-2000-289667, US-2.139.984, US-5.085.063, EP-442.905 décrivent une autre solution qui vise à désaccoupler le guidon et la fourche lorsque le dispositif antivol est activé et à les accoupler de nouveau lorsqu'il est désactivé.

Dans ce cas, la tête de la potence est montée pivotante par rapport à la colonne de direction, des moyens d'accouplement tels qu'une tige par exemple actionnée par un barillet, étant susceptibles d'occuper deux états, un premier état correspondant à l'état désactivé du dispositif antivol dans lequel ils lient cinématiquement la tête de la potence et la colonne de direction, et un second état correspondant à l'état activé du dispositif antivol dans lequel ils autorisent un pivotement relatif entre la tête de la potence et la colonne de direction.

Ainsi, lorsque le dispositif antivol est activé, la bicyclette ne peut pas être dirigée, le guidon étant désaccouplé en rotation de la fourche. Lorsque le dispositif antivol est désactivé, la bicyclette peut être dirigée correctement, le guidon étant accouplé en rotation à la fourche.

Selon un mode de réalisation, les moyens d'accouplement comprennent généralement au moins un pion susceptible de se translater et de s'immobiliser en partie dans un logement ménagé au niveau de la tête de la potence et dans un logement ménagé au niveau de la colonne de direction. Ce pion se translate selon une seule direction, notamment radiale, comme illustré dans les documents de l'art antérieur.

Même si ce type de dispositif dissuade les voleurs et limite les risques d'endommagement des organes de direction lors d'une tentative de vol, il ne donne pas pleinement satisfaction car cet agencement induit dès l'origine ou à l'usure, un jeu au niveau de la direction préjudiciable au pilotage de la bicyclette. En effet, en raison du déplacement en translation de l'élément d'accouplement, il existe, d'origine ou à l'usure, un jeu entre ledit élément et son ou ses logements ce qui se traduit par un jeu entre la potence et la colonne de direction. Dans le cas d'un vélo tout-terrain, ce jeu au niveau de la direction a tendance à s'accroître rapidement en raison des contraintes et des chocs endurés par la direction.

Enfin, l'accouplement en rotation des solutions existantes n'est pas suffisamment résistant pour subir les tests d'homologation.

Les documents US-5.279.197 et GB-2.298.676 décrivent des dispositif antivol comportant des moyens d'accouplement avec plusieurs billes ou barreaux susceptibles de se translater selon plusieurs directions radiales afin d'activer ou non ledit dispositif antivol. Comme précédemment, il existe toujours un jeu au niveau de la direction.

Aussi, la présente invention vise à pallier les inconvénients de l'art antérieur en proposant un dispositif antivol pour cycle, et plus généralement pour tout véhicule dirigé par un guidon, de conception simple, susceptible de dissuader les voleurs et de limiter les risques d'endommagement du véhicule lors des tentatives de vols et d'apparition d'un jeu au niveau de la direction.

A cet effet, l'invention a pour objet un dispositif antivol pour cycle ou analogue, et plus généralement pour tout véhicule dirigé par un guidon, ledit cycle comportant une potence reliée à une colonne de direction, ledit dispositif antivol comprenant des moyens de liaison autorisant un mouvement de rotation relatif entre d'une part une première partie solidaire de la potence, et d'autre part, une seconde partie solidaire de l'extrémité inférieure de la colonne de direction ainsi que des moyens d'accouplement en rotation entre lesdites parties susceptibles d'occuper deux états, un premier état correspondant à l'état désactivé du dispositif antivol dans lequel les moyens d'accouplement lient cinématiquement lesdites parties, et un second état correspondant à l'état activé du dispositif antivol dans lequel les moyens d'accouplement n'assurent pas l'accouplement en rotation entre lesdites parties, lesdits moyens d'accouplement comprenant au moins un premier élément d'accouplement susceptible de se translater selon une première direction et de s'immobiliser dans une première empreinte et au moins un second élément d'accouplement susceptible de se translater selon une seconde direction et de s'immobiliser dans une seconde empreinte, caractérisé en ce que ledit au moins un premier élément d'accouplement se translate selon une première direction radiale et en ce que ledit au moins un second élément d'accouplement se translate selon une seconde direction axiale.

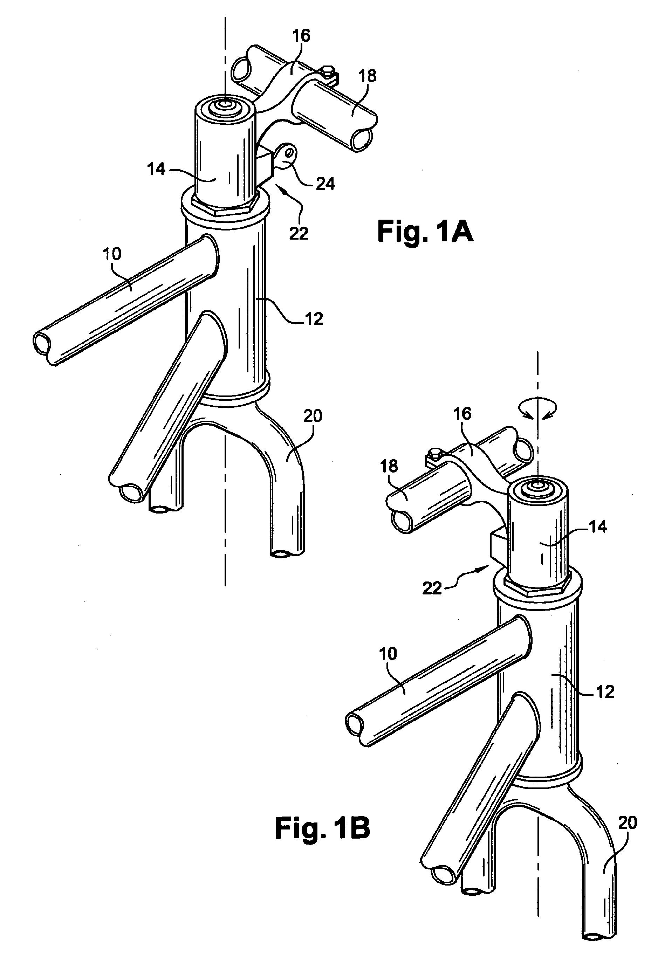

D'autres caractéristiques et avantages ressortiront de la description qui va suivre de l'invention, description donnée à titre d'exemple uniquement, en regard des dessins annexés sur lesquels:
➢ la figure 1A est une vue en perspective d'une partie d'un cycle illustrant la direction, ledit cycle étant équipé d'un dispositif antivol selon l'invention à l'état désactivé,
➢ la figure 1B est une vue en perspective d'une partie d'un cycle illustrant la direction, ledit cycle étant équipé d'un dispositif antivol selon l'invention du l'état activé,
> la figure 2A est une coupe selon un plan contenant l'axe de la direction illustrant le dispositif antivol à l'état désactivé,
➢ la figure 2B est une coupe selon un plan contenant l'axe de la direction illustrant le dispositif antivol à l'état activé,
> la figure 3 est une vue éclatée illustrant une partie de la tête de la potence, la partie supérieure de la colonne de direction ainsi qu'une partie des moyens d'accouplement,
➢ la figure 4 est un section selon la ligne IV-IV de la figure 3,
➢ la figure 5 est une section selon la ligne V-V de la figure 3, et
➢ la figure 6 est une vue en élévation d'une partie des moyens d'accouplement.

Sur les figures 1A et 1B, on a représenté en 10 une partie d'un cadre de bicyclette supportant une douille de direction 12 dans laquelle peut pivoter une colonne de direction 14 à l'extrémité supérieure de laquelle est rapportée une potence 16 supportant un guidon 18 et à l'extrémité inférieure de laquelle est rapportée une fourche 20 supportant une roue directrice non représentée.

De manière connue, pour diriger la bicyclette, il suffit d'agir sur le guidon 18 pour provoquer la rotation de la colonne de direction et le pivotement de la roue directrice.

Le cadre, la fourche, le guidon, la liaison entre la douille et la colonne ne sont pas plus détaillés car ils sont connus de l'homme de l'art.

Un dispositif antivol 22 est prévu au niveau de la colonne de direction 14, une clé 24 permettant d'activer ou non ledit dispositif.

Ce dispositif antivol comprend des moyens d'accouplement de la potence 16 et de la fourche 20 susceptibles d'occuper deux états, un premier état correspondant à l'état désactivé du dispositif antivol, illustré par la figure 1A, dans lequel les moyens d'accouplement lient cinématiquement la potence à la fourche, et un second état correspondant à l'état activé du dispositif antivol, illustré par la figure 1B, dans lequel les moyens d'accouplement n'assurent pas l'accouplement de la potence et de la fourche rendant indépendantes les rotations desdits deux éléments.

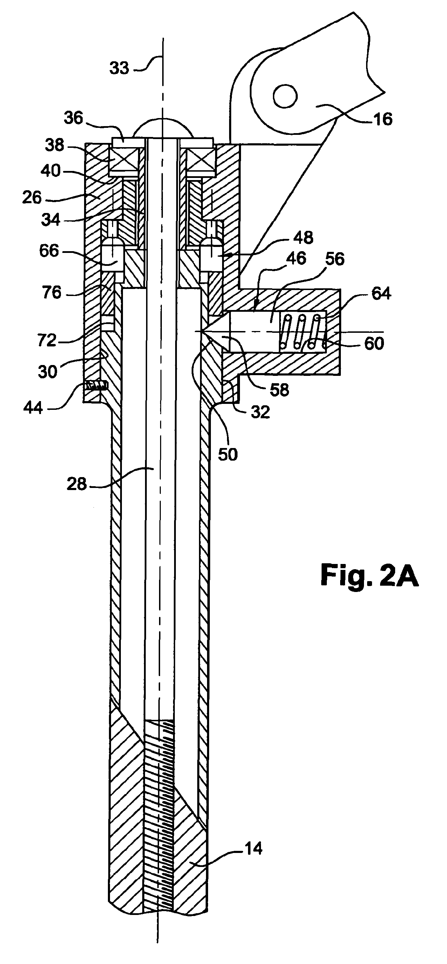

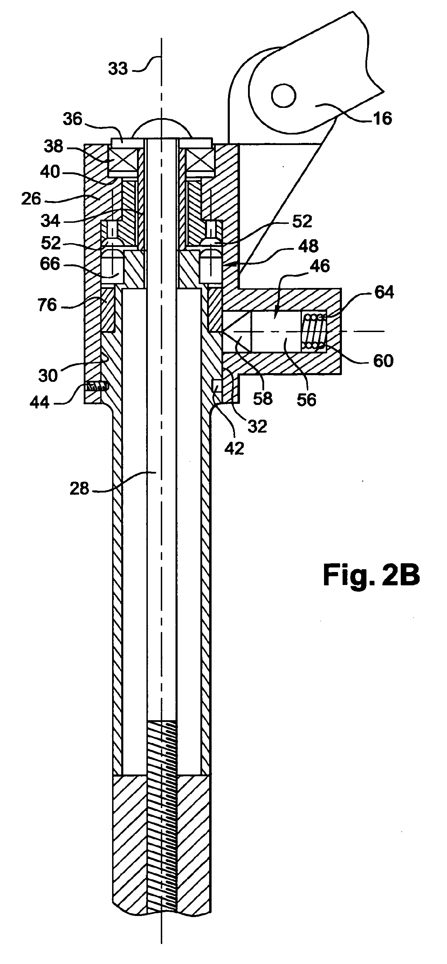

Sur les figures 2A et 2B, on a représenté en détails le dispositif antivol selon l'invention, à l'état désactivé sur la figure 2A correspondant à l'état dans lequel la potence et la fourche sont accouplées, et à l'état activé sur la figure 2B correspondant à l'état dans lequel la potence et la fourche sont désaccouplées. Pour faciliter la compréhension, la colonne de direction est sortie de la douille de direction sur les figures 2A et 2B.

Selon l'invention, les moyens d'accouplement peuvent être placés indifféremment entre la potence et la colonne de direction comme illustré sur les différentes figures, ou entre une partie inférieure et une partie supérieure de la colonne de direction.

Selon le mode de réalisation choisi, la potence 16 comprend une tête de potence 26 montée pivotante à l'extrémité supérieure d'une colonne de direction 14. Cette colonne de direction est avantageusement réalisée en deux parties afin que la potence et la partie supérieure de la colonne de direction constituent un ensemble commercialisable comme pour les dispositifs de l'art antérieur. Selon un mode de réalisation connu, la partie supérieure de la colonne de direction comprend au niveau de son extrémité inférieure une forme en biseau susceptible de coopérer avec l'extrémité de la partie inférieure de la colonne de direction, un élément fileté 28, notamment un tirant, assurant la liaison entre les parties inférieure et supérieure.

La tête de potence 26 comprend un alésage 30 susceptible de recevoir l'extrémité supérieure de la colonne de direction 14, cette dernière comportant une portée 32 ajustée audit alésage 30. Selon un mode de réalisation, le guidage en rotation de la tête de potence 26 par rapport à la portée 32 de la colonne de direction peut être obtenu grâce à un ajustage glissant entre la portée 32 et l'alésage 30 et un jeu de matériaux appropriés pour le glissement.

Afin d'immobiliser en translation la tête de potence 26 par rapport à la colonne de direction 14 selon l'axe 33 correspondant à l'axe de la colonne de direction, ladite colonne est prolongée par une entretoise 34 surmontée par une bague 36 qui repose sur un palier 38 prenant appui contre un épaulement 40 ménagé au niveau de la surface supérieure de la tête de potence 26, de préférence dans un logement adapté au palier 38. En complément, un tirant 28, de préférence celui prévu pour relier les deux parties de la colonne de direction, maintient l'ensemble.

Cet agencement permet d'obtenir un mouvement de rotation de la tête de potence par rapport à la colonne de direction tout en limitant les mouvements de translation de ladite tête selon l'axe 33. Ce mode de réalisation n'est en rien limitatif et d'autres solutions techniques peuvent être envisagées.

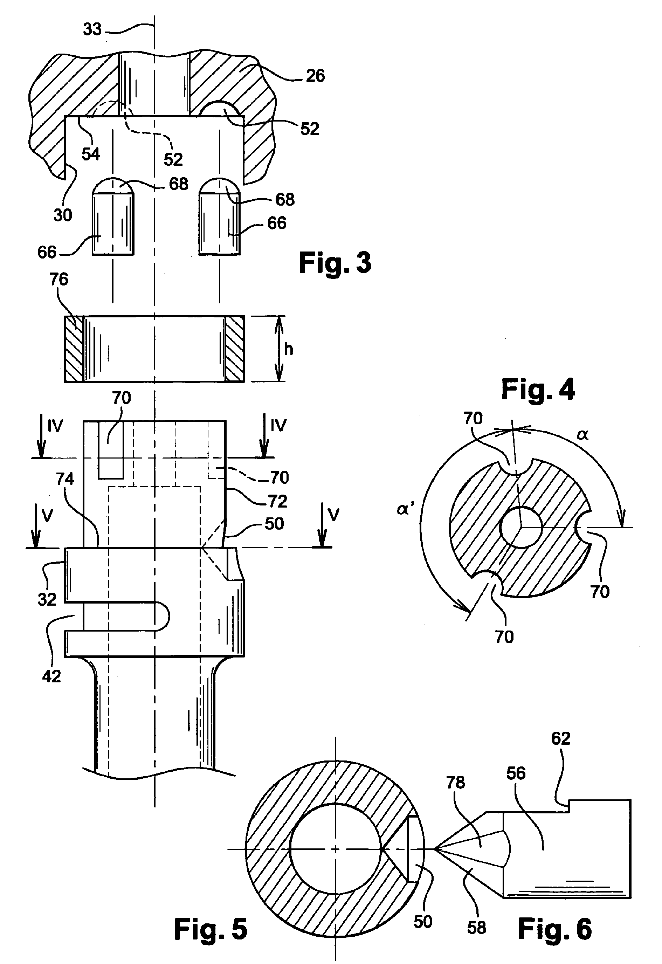

Avantageusement, des moyens d'indexage permettent de limiter le mouvement de pivotement de la tête de potence par rapport à la colonne de direction 14. Selon un mode de réalisation illustré sur les figures 2A, 2B et 3, la colonne de direction comprend une gorge 42 au niveau de la surface périphérique de la portée 32, de préférence dans un plan sensiblement perpendiculaire à l'axe de rotation de ladite colonne, qui ne s'étend pas sur la globalité du pourtour de ladite colonne. En complément, un élément en saillie 44 tel qu'une vis par exemple, est prévu au niveau de l'alésage 30 de la tête de potence 26 dont une partie est susceptible de se loger dans la gorge 42.

Ces moyens d'indexage constituent également des moyens pour limiter la translation de la tête de potence par rapport à la colonne de direction selon l'axe 33.

D'autres solutions techniques pourraient être envisagées pour réaliser la fonction d'indexation.

Selon l'invention, les moyens d'accouplement entre la tête de potence et la colonne de direction comprennent au moins un premier élément d'accouplement 46 susceptible de se translater selon une première direction, radiale et au moins un second élément d'accouplement 48 susceptible de se translater selon une seconde direction axiale.

Le fait de prévoir des accouplements selon deux directions procure un accouplement plus rigide qui tend à réduire l'apparition du jeu au niveau de la direction. Ce type d'accouplement procure par ailleurs une meilleure résistance mécanique permettant à la direction de résister aux déformations même dans des conditions d'utilisation extrêmes, comme l'utilisation tout-terrain ou les tests d'homologation.

Avantageusement, le premier élément d'accouplement 46 est relié à la tête de potence 26 et comprend une partie susceptible de se loger dans une première empreinte 50 ménagée au niveau de la surface périphérique de la colonne de direction 14, notamment au niveau de la portée 32.

En complément, le second élément d'accouplement 48 est relié à la colonne de direction 14 et comprend une partie susceptible de se loger dans une seconde empreinte 52 ménagée au niveau du fond 54 de l'alésage 30 de la tête de potence 26.

Le fait de prévoir un élément d'accouplement relié à la tête de la potence et un autre relié à la colonne de direction permet d'accroître la résistance mécanique de l'accouplement.

Selon un mode de réalisation, le premier élément d'accouplement 46 se présente sous la forme d'au moins une goupille 56 sensiblement cylindrique avec une extrémité 58 sensiblement conique, ladite goupille étant susceptible de se translater dans un alésage 60 ménagé au niveau de la tête de la potence 26, de préférence d'axe sensiblement perpendiculaire à l'axe 33 et débouchant dans l'alésage 30. L'extrémité 58 de la goupille est susceptible de pénétrer et de s'immobiliser dans l'empreinte 50, ménagée au niveau de la surface périphérique de la colonne de direction 14, de préférence sensiblement conique.

La goupille 56 peut se translater dans l'alésage 60 entre deux positions, une première position dans laquelle, aucune partie de la goupille n'est en saillie à l'intérieur de l'alésage 30 et une autre position dans laquelle au moins une partie de la goupille est en saillie dans l'alésage 30 et vient se loger dans l'empreinte 50 prévue au niveau de la colonne de direction afin d'accoupler la tête de potence et ladite colonne direction lorsque le dispositif antivol est désactivé.

Les formes coniques de l'extrémité de la goupille et de l'empreinte favorisent le centrage de la goupille 56 dans l'empreinte 50 et limitent les risques d'apparition d'un jeu.

Pour assurer le déplacement de la goupille, un barillet manoeuvré par la clé 24, susceptible de coopérer avec un épaulement 62 ménagé au niveau de ladite goupille, est utilisé pour maintenir la goupille 56 en dehors de l'empreinte 50 lorsque le dispositif antivol est à l'état activé, des moyens de rappel 64, sous forme d'un ressort, étant prévus pour tendre à pousser la goupille en direction de la colonne de direction.

Le barillet et la liaison entre le barillet et la goupille ne sont pas plus détaillés car à la portée de l'homme du métier.

Selon un mode de réalisation, le second élément d'accouplement se présente sous la forme d'au moins un pion 66 de forme sensiblement cylindrique, avec une extrémité 68 de préférence en forme de demi sphère, ledit pion 66 étant disposé dans un logement 70 prévu au niveau de l'extrémité supérieure de la colonne de direction, les formes du logement 70 et du pion 66 permettant un coulissement du pion 66 selon une direction sensiblement parallèle à l'axe 33.

L'extrémité 68 de chaque pion est susceptible de pénétrer et de s'immobiliser dans une empreinte 52 ménagée au niveau du fond 54 de l'alésage 30 de la tête de potence 26. Avantageusement, la ou les empreintes 52 ont une forme adaptée à celle de l'extrémité du pion, de préférence une forme en demi sphère.

Avantageusement, la colonne de direction supporte plusieurs pions 66, trois ou quatre, lesdits pions n'étant pas de préférence répartis de manière régulière, comme illustré sur la figure 4. Cette répartition permet d'avoir une immobilisation en rotation de la tête de potence par rapport à la colonne de direction selon une seule disposition angulaire.

Selon un mode de réalisation, le déplacement du ou des pions 66 vers le bas est obtenu par gravité. Par ailleurs, ce déplacement vers le bas est favorisé par les formes des empreintes 52 et l'extrémité des pions 66, les pions ayant tendance à être chassés des empreintes lorsque la tête de potence 26 pivote par rapport à la colonne de direction 14.

Pour déplacer les pions 66 vers le haut et maintenir leurs extrémités dans les empreintes 52 correspondantes, la colonne de direction comprend au niveau de son extrémité supérieure une portée 72 d'un diamètre inférieur à celui de la portée 32 ajustée à l'alésage 30. La différence de diamètre entre ces deux portées 32, 72 définit un épaulement 74 disposé de préférence au niveau ou légèrement au dessus de l'extrémité en pointe de la goupille 56. Les logements 70 débouchent au niveau de la surface de la portée 72 afin que les pions 66 soient en saillie par rapport à ladite portée 72.

En complément, une bague 76 ajustée à la portée 72, est prévue entre la colonne de direction 14 et la tête de potence 26, ladite bague 76 étant susceptible de coulisser par rapport la colonne de direction.

La hauteur h de la bague 76 est ajustée de manière à ce que lorsque la bague 76 repose contre l'épaulement 74, les pions 66 soient en dehors des empreintes 52, le dispositif antivol étant activé comme illustré sur la figure 2B et lorsque la goupille 56 est maintenue dans son empreinte 50 et le dispositif antivol est désactivé, les pions 66 soient maintenus dans leurs empreintes 52.

Cet agencement particulier permet d'obtenir la translation de la goupille 56 et des pions 66 à l'aide d'une commande unique, la clé 24.

Afin de favoriser la translation de la bague 76 vers le haut, la goupille comprend au niveau de son extrémité un méplat 78 susceptible de former une rampe apte à soulever ladite bague 76.

Le principe de fonctionnement du dispositif est maintenant décrit au regard des figures 1A, 1B, 2A et 2B.

En partant de l'état activé du dispositif antivol illustré par les figures 1B et 2B, la goupille 56 est maintenue hors de l'empreinte 50 par le barillet ou la commande, la bague 76 repose sur l'épaulement 74 et les pions 66 sont disposés en dehors des empreintes 52. Dans cette configuration, la tête de potence 26 peut pivoter indépendamment de la colonne de direction comme illustré sur la figure 1B. Cette configuration apporte également un avantage en terme de rangement, le guidon étant susceptible d'être disposé dans le plan du cadre de la bicyclette.

Lorsque l'utilisateur souhaite désactiver le dispositif antivol, en agissant sur le barillet ou la commande à l'aide de la clé 24 par exemple, la goupille 56 est relâchée et tend à se translater en direction de la colonne de direction en raison des moyens de rappel 64. Si l'empreinte 50 n'est pas disposée au droit de la goupille 56, l'extrémité de la goupille 56 vient en butée contre la portée 32 de la colonne de direction. L'utilisateur commande, en agissant sur le guidon, la rotation de la tête de potence jusqu'à ce que la goupille 56 soit disposée approximativement au droit de l'empreinte 50. Même si la goupille et l'empreinte ne sont pas parfaitement alignées, les formes coniques permettent un centrage automatique de ladite goupille par rapport à l'empreinte. Poussée par les moyens de rappel 64, la goupille 56 pénètre dans l'empreinte 50 et y est maintenue. En se translatant, la goupille 56 provoque la translation vers le haut de la bague 76 qui pousse à son tour et maintient les pions 66 dans leurs empreintes respectives 52.

Comme illustré sur les figures 1A et 2A, la tête de potence 26 est solidarisée en rotation avec la colonne de direction, le guidon est cinématiquement lié à la fourche et l'utilisateur peut se diriger convenablement.

Bien entendu, l'invention n'est évidemment pas limitée au mode de réalisation représenté et décrit ci-dessus, mais en couvre au contraire toutes les variantes, notamment en ce qui concerne les dimensions, les formes et les matériaux des différents éléments. Ainsi, la tête de potence peut être réalisé d'un seul tenant ou en plusieurs parties comme illustré sur les différentes figures. Enfin, ce dispositif peut s'appliquer à tous les véhicules dirigés à l'aide d'un guidon.

## Revendications

1. Dispositif antivol pour cycle et plus généralement pour tout véhicule dirigé par un guidon, ledit cycle comportant une potence (16) reliée à une colonne de direction (14), ledit dispositif antivol comprenant des moyens de liaison autorisant un mouvement de rotation relatif entre d'une part une première partie solidaire de la potence (16), et d'autre part, une seconde partie solidaire de l'extrémité inférieure de la colonne de direction (14) ainsi que des moyens d'accouplement en rotation entre lesdites parties susceptibles d'occuper deux états, un premier état correspondant à l'état désactivé du dispositif antivol dans lequel les moyens d'accouplement lient cinématiquement lesdites parties, et un second état correspondant à l'état activé du dispositif antivol dans lequel les moyens d'accouplement n'assurent pas l'accouplement en rotation entre lesdites parties, lesdits moyens d'accouplement comprenant au moins un premier élément d'accouplement (46) susceptible de se translater selon une première direction et de s'immobiliser dans une première empreinte (50) et au moins un second élément d'accouplement (48) susceptible de se translater selon une seconde direction et de s'immobiliser dans une seconde empreinte (52), **caractérisé en ce que** ledit au moins un premier élément d'accouplement (46) se translate selon une première direction radiale et **en ce que** ledit au moins un second élément d'accouplement (48) se translate selon une seconde direction axiale.

2. Dispositif antivol selon la revendication 1, **caractérisé en ce que** le premier élément d'accouplement (46) est relié à la tête de potence (26) et comprend une partie susceptible de se loger dans une première empreinte (50) ménagée au niveau de la surface périphérique de la colonne de direction (14) et **en ce que** le second élément d'accouplement (48) est relié à la colonne de direction (14) et comprend une partie susceptible de se loger dans une seconde empreinte (52) ménagée au niveau de la tête de potence (26).

3. Dispositif antivol selon la revendication 1 ou 2, **caractérisé en ce que** le premier élément d'accouplement (46) se présente sous la forme d'au moins une goupille (56) susceptible de se translater selon une direction sensiblement perpendiculaire à l'axe de la colonne de direction (14), dont l'extrémité (58) est susceptible de s'immobiliser dans l'empreinte (50) ménagée au niveau de la surface périphérique de la colonne de direction (14), un barillet étant prévu pour maintenir la goupille (56) en dehors de l'empreinte (50) lorsque le dispositif antivol est à l'état activé, des moyens de rappel (64) étant prévus pour tendre à translater la goupille (56) en direction de l'empreinte (50) et à l'y maintenir.

4. Dispositif antivol selon la revendication 3, **caractérisé en ce que** les formes de l'extrémité de la goupille (56) et de l'empreinte (50) sont adaptées pour permettre un autocentrage.

5. Dispositif antivol selon l'une quelconque des revendications précédentes, **caractérisé en ce que** le second élément d'accouplement (48) se présente sous la forme d'au moins un pion (66) disposé dans un logement (70) prévu au niveau de l'extrémité supérieure de la colonne de direction, les formes du logement (70) et du pion (66) permettant un coulissement du pion (66) selon une direction sensiblement parallèle à l'axe de la colonne de direction, l'extrémité (68) de chaque pion étant susceptible de s'immobiliser dans une empreinte (52) ménagée au niveau de la tête de potence (26).

6. Dispositif antivol selon la revendication 5, **caractérisé en ce que** l'extrémité du ou des pions (66) et de la ou les empreintes (52) ont des formes conjuguées en forme de demi-sphère.

7. Dispositif antivol selon l'une quelconque des revendications précédentes, **caractérisé en ce qu'**il comprend des moyens (76) interposés entre au moins un premier élément d'accouplement (46) et au moins un second élément d'accouplement (48), susceptibles de coordonner les mouvements de pénétration des éléments d'accouplement (46, 48) dans leurs empreintes respectives (50, 52).

8. Dispositif antivol selon la revendication 7, **caractérisé en ce qu'**une bague (76) est montée coulissante autour de la colonne de direction dont l'extrémité inférieure est disposée au niveau de l'empreinte (50) et **en ce que** les logements prévus pour les seconds éléments d'accouplement (48) débouchent à la surface périphérique de la colonne de direction afin que lesdits seconds éléments d'accouplement soient en saillie par rapport à ladite surface périphérique, la bague ayant une hauteur adaptée de manière à ce que lorsque le premier élément d'accouplement est immobilisé dans l'empreinte (50), la bague maintienne les seconds éléments d'accouplement dans leurs empreintes (52).

9. Dispositif antivol selon la revendication 8, **caractérisé en ce que** le premier élément d'accouplement comprend un méplat (78) susceptible de former une rampe pour soulever la bague (76).

10. Dispositif antivol selon l'une quelconque des revendications précédentes, **caractérisé en ce qu'**il comprend des moyens d'indexation pour limiter angulairement le mouvement de rotation relatif entre la potence (26) et la partie inférieure de la colonne de direction.

## Claims

1. An antitheft device for a bicycle and more generally for any vehicle steered by handlebars, said bicycle comprising a bracket (16) connected to a steering column (14), said antitheft device comprising connection means allowing a relative rotation movement between firstly a first part secured to the bracket (16) and secondly a second part secured to the bottom end of the steering column (14), as well as means of rotational coupling between said parts able to occupy two states, a first state corresponding to the deactivated state of the antitheft device in which the coupling means kinematically connect said parts, and a second state corresponding to the activated state of the antitheft device in which the coupling means do not provide rotational coupling between said parts, said coupling means comprising at least one first coupling element (46) able to translate in a first direction and be immobilised in a first cavity (50) and at least one second coupling element (48) able to translate in a second direction and be immobilised in a second cavity (52), **characterised in that** said at least one first coupling element (46) translates in a first radial direction and **in that** said at least one second coupling element (48) translates in a second axial direction.

2. An antitheft device according to claim 1, **characterised in that** the first coupling element (46) is connected to the bracket head (26) and comprises a part able to be housed in a first cavity (50) provided at the peripheral surface of the steering column (14) and **in that** the second coupling element (48) is connected to the steering column (14) and comprises a part able to be housed in a second cavity (52) provided at the bracket head (26).

3. An antitheft device according to claim 1 or 2, **characterised in that** the first coupling element (46) is in the form of at least one pin (56) able to translate in a direction substantially perpendicular to the axis of the steering column (14), the end (58) of which is able to be immobilised in the cavity (50) provided at the peripheral surface of the steering column (14), a barrel being provided to hold the pin (56) outside the cavity (50) when the antitheft device is in the activated state, return means (64) being provided for tending to translate the pin (56) in the direction of the cavity (50) and to hold it therein.

4. An antitheft device according to claim 3, **characterised in that** the shapes of the end of the pin (56) and of the cavity (50) are suitable for allowing self-centring.

5. An antitheft device according to any one of the preceding claims, **characterised in that** the second coupling element (48) is in the form of at least one stud (66) placed in a housing (70) provided at the top end of the steering column, the shapes of the housing (70) and of the stud (66) allowing a sliding of the stud (66) in a direction substantially parallel to the axis of the steering column, the end (68) of each stud being able to be immobilised in a cavity (52) provided at the bracket head (26).

6. An antitheft device according to claim 5, **characterised in that** the end of the stud or studs (66) and of the cavity or cavities (52) have conjugate shapes in the form of a hemisphere.

7. An antitheft device according to any one of the preceding claims, **characterised in that** it comprises means (76) interposed between at least one first coupling element (46) and at least one second coupling element (48) able to coordinate the penetration movements of the coupling elements (46, 48) in their respective cavities (50, 52).

8. An antitheft device according to claim 7, **characterised in that** a ring (76) is mounted slidably around the steering column, the bottom end of which is placed level with the cavity (50), and **in that** the housings provided for the second coupling elements (48) emerge at the peripheral surface of the steering column so that said second coupling elements project with respect to said peripheral surface, the ring having a suitable height so that, when the first coupling element is immobilised in the cavity (50), the ring holds the second coupling elements in their cavities (52).

9. An antitheft device according to claim 8, **characterised in that** the first coupling element comprises a flat (78) able to form a ramp in order to lift the ring (76).

10. An antitheft device according to any one of the preceding claims, **characterised in that** it comprises locating means for angularly limiting the relative rotation movement between the bracket (26) and the bottom part of the steering column.

## Patentansprüche

1. Diebstahlsicherung für Zweirräder und allgemeiner für alle mit Hilfe eines Lenkers gesteuerten Fahrzeuge, wobei das Zweirrad einen mit einer Lenksäule (14) verbundenen Träger (16) umfasst und die Diebstahlsicherung Verbindungsmittel aufweist, die eine relative Rotationsbewegung zwischen einerseits einem ersten mit dem Träger (16) zusammenhängenden Teil und andererseits einem mit dem unteren Ende der Lenksäule (14) zusammenhängenden Teil ermöglicht, ebenso wie Koppelmittel bezüglich der Rotation zwischen den genannten Teilen, die dazu eingerichtet sind, zwei Zustände einzunehmen, einen ersten Zustand, der dem deaktivierten Zustand der Diebstahlvorrichtung entspricht, in dem die Koppelmittel die genannten Teile kinematisch verbinden, und einen zweiten Zustand, der dem aktiven Zustand der Diebstahlsicherung entspricht, in dem die Koppelmittel die Rotationskoppelung zwischen den genannten Teilen nicht sicherstellen, wobei die Koppelmittel wenigstens ein erstes Koppelelement (46) aufweisen, das dazu eingerichtet ist, sich in eine erste Richtung zu bewegen und in einer ersten Vertiefung (50) zu ruhen, und wenigstens ein zweites Koppelelement (48), das dazu eingerichtet ist, sich in eine zweite Richtung zu bewegen und in einer zweiten Vertiefung (52) zu ruhen, **dadurch gekennzeichnet, dass** sich das wenigstens erste Koppelelement (46) in eine erste radiale Richtung bewegt und dass sich das wenigstens zweite Koppelelement (48) in wenigstens eine zweite axiale Richtung bewegt.

2. Diebstahlsicherung gemäß Anspruch 1, **dadurch gekennzeichnet, dass** das erste Koppelelement (46) dem Kopf des Trägers (26) zugeordnet ist und einen Abschnitt aufweist, der dazu geeignet ist, sich in eine erste Vertiefung (50) zu verlagern, die im Bereich der Umfangsoberfläche der Lenksäule (14) ausgebildet ist, und dass das zweite Koppelelement (48) der Lenksäule (14) zugeordnet ist und einen Abschnitt aufweist, der dazu geeignet ist, sich in eine zweite Vertiefung (52) zu verlagern, die im Bereich des Kopfs des Trägers (26) ausgebildet ist.

3. Diebstahlsicherung nach Anspruch 1 oder 2, **dadurch gekennzeichnet, dass** das erste Koppelelement (46) die Gestalt von wenigstens einem Bolzen (56) aufweist, der sich dazu eignet, sich in eine im wesentlichen zur Achse der Lenksäule (14) rechtwinkelige Richtung zu bewegen, und dessen Ende (58) dazu eingerichtet ist, in der Vertiefung (50) zu ruhen, die im Bereich der Umfangsfläche der Lenksäule (14) ausgebildet ist, wobei ein Schließzylinder vorgesehen ist, um den Bolzen (56) außerhalb der Vertiefung (50) zu halten, bis die Diebstahlsicherung im aktiven Zustand ist, und wobei Rückstellmittel (64) vorgesehen sind, durch die der Bolzen (56) dazu neigt, sich in Richtung der Vertiefung (50) zu bewegen und dort gehalten zu werden.

4. Diebstahlsicherung nach Anspruch 3, **dadurch gekennzeichnet, dass** die Ausgestaltung des Endes des Bolzens (56) und der Vertiefung (50) dazu eingerichtet sind, eine Autozentrierung zu ermöglichen.

5. Diebstahlsicherung nach einem der vorhergehenden Ansprüche, **dadurch gekennzeichnet, dass** das zweite Koppelelement (48) die Gestalt von wenigstens einem Stift (66) aufweist, der in einer Lagerung (70) angeordnet ist, die im Bereich des oberen Endes der Lenksäule vorgesehen ist, wobei die Ausgestaltung der Lagerung (70) und des Stifts (66) ein Gleiten des Stifts (66) in eine im Wesentlichen zur Achse der Lenksäule parallele Richtung gestattet, und wobei das Ende (86) von jedem Stift dazu geeignet ist, in einer Vertiefung (52) zu ruhen, die im Bereich des Kopfs des Trägers (26) ausgebildet ist.

6. Diebstahlsicherung nach Anspruch 5, **dadurch gekennzeichnet, dass** das Ende des Stifts oder der Stifte (66) und der Vertiefung oder der Vertiefungen (52) einander entsprechende halbsphärische Formen haben.

7. Diebstahlsicherung nach einem der vorhergehenden Ansprüche, **dadurch gekennzeichnet, dass** sie Mittel (76) aufweist, die zwischen wenigstens einem ersten Koppelelement (46) und wenigstens einem zweiten Koppelelement angeordnet sind, und die sich dazu eignen, die Eindringbewegungen der Koppelelemente (46, 48) in ihre jeweiligen Vertiefungen (50, 52) zu koordinieren.

8. Diebstahlsicherung nach Anspruch 7, **dadurch gekennzeichnet, dass** ein Ring (76) gleitend um die Lenksäule angeordnet ist, dessen unteres Ende im Bereich der Vertiefung (50) angeordnet ist, und dass die für die zweiten Koppelelemente (48) vorgesehenen Lagerungen zur Umfangsfläche der Lenksäule offen sind, so dass die zweiten Koppelelemente bezüglich der genannten Umfangsfläche hervorstehen, wobei der Ring eine Höhe hat, die derart eingerichtet ist, dass der Ring die zweiten Koppelelemente in ihren Vertiefungen (52) hält, wenn das erste Koppelelement in der Vertiefung (50) ruht.

9. Diebstahlsicherung nach Anspruch 8, **dadurch gekennzeichnet, dass** das erste Koppelelement eine Abflachung (78) aufweist, die dazu geeignet ist, eine Rampe zum Anheben des Rings (76) zu bilden.

10. Diebstahlsicherung nach einem der vorhergehenden Ansprüche, **dadurch gekennzeichnet, dass** sie Anschlagmittel aufweist, um die relative Rotationsbewegung zwischen dem Träger (26) und dem unteren Teil der Lenksäule winkelmäßig zu begrenzen.
